# EUROPEAN PATENT SPECIFICATION

(11) **EP 1 961 313 B1**
(45) Date of publication and mention of the grant of the patent: **14.04.2010**
(21) Application number: 07380046.8
(22) Date of filing: 21.02.2007
(51) Int. Cl.: A23N 1/00, B08B 9/02

(54) **Device for cleaning the filter pipes used to extract fruit juice**
Vorrichtung zur Reinigung von Filterrohren zum Fruchtsaftpressen
Dispositif de nettoyage des dépôts dans les tuyaux utilisés pour extraire le jus de fruit

(43) Date of publication of application: 27.08.2008
(73) Proprietor: FOOD MACHINERY ESPANOLA S.A., 46012 Valencia (ES)
(72) Inventor: Sanchez de Leon Rodriguez Roda, Juan Antonio, 46012 Valencia (ES)
(74) Representative: Elzaburu Marquez, Alberto

(56) References cited:
- EP-A1- 0 757 896
- GB-A- 2 346 945
- US-A- 5 182 984
- US-A1- 2003 028 957
- US-A1- 2006 201 345

## Description

The object to which the invention protected by this Patent refers is a device for cleaning the filter pipes used to extract fruit juice, which enables the extraction of fruit juice in conventional machines without the need to interrupt the process every once in a while.

### BACKGROUND

The known procedure for extracting juice from fruit, in particular citric fruits, is to introduce the fruit in a machine that performs this function. To this end, the fruit is channeled and pushed by feed forks to receptacles that receive the fruit, where the fruit is deposited. At the same time, this machine is provided with other receptacles that are located above and are vertically aligned with the receptacles that receive the fruit and that move vertically to trap the fruit.

A cutter then makes a circular incision at the top and bottom of the piece of fruit and, when the upper and lower receptacles compress and squeeze the fruit, the juice exits through a filter pipe located below the receptacles towards a juice collector.

The filter pipe into which the fruit juice enters has holes all along its surface that become obstructed when the fruit pulp gets stuck in them. Therefore the machinery has to be stopped every once in a while (approximately every 6 or 7 hours) to clean the filter pipe, thus diminishing the performance and autonomy of this machinery.

It is also known the use of devices for cleaning filters consisting of a cylindrically shaped tube that runs telescopically through the inside of the filter pipe (see e.g. EP 0 757 896).

### DESCRIPTION OF THE INVENTION

The purpose of the invention that comprises the object of this Patent is to eliminate the structural and functional drawbacks inherent in the above described object, and it has been designed and developed in keeping with this preeminent purpose.

The device covered by the Patent consists of a cylindrically shaped tube that runs telescopically through the inside of the filter pipe, and some circumferential openings have been made at one end of this interior tube through which previously injected pressurized air is expelled along its entire length.

Although the injection of air is specified, any type of fluid can be injected into the interior tube that will perform the same function and will succeed in keeping all the holes of the filter pipe clean, expelling all the impurities that, during the normal process phase, stick to these holes made along the filter pipe.

In this way, the filter pipe is automatically cleaned, which enables the machine to run uninterruptedly throughout its work cycle. In addition, the performance of this machine is considerably enhanced, with the resulting improvement of its autonomy.

### BRIEF DESCRIPTION OF THE DRAWINGS

To complement the description of the invention and to facilitate interpretation of the structural and functional features of its object, drawings are attached hereto that schematically show a preferential execution of the device for cleaning the filter pipes used to extract fruit juice that comprises the object of this Patent. In these drawings:

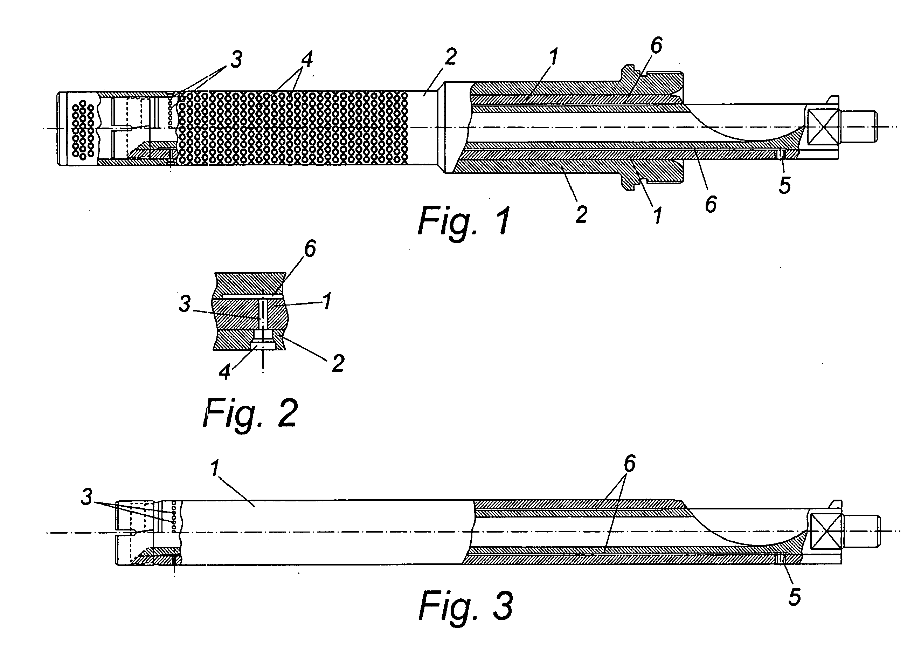

- Figure 1 shows a section of the unit formed by the filter pipe and the interior tube for cleaning it.
- Figure 2 shows a detail of the filter pipe holes and their connection to the opening where the pressurized air exits.
- Figure 3 shows a section of the interior tube that runs through the inside of the filter pipe.

### DESCRIPTION OF A PREFERENTIAL EXECUTION

To clearly show the nature and scope of the advantageous application of the device for cleaning filter pipes that comprises the object of the claimed invention, following is a description of its structure with reference to the drawings which, because they represent a preferential execution of this object on an informative basis, should be considered in the broadest sense of the word and not as limitative of the application and the content of the claimed invention.

The device (1) for cleaning the filter pipes used to extract fruit juice is composed of a cylindrically shaped tube (1) that runs telescopically through the inside of the filter pipe (2), and some circumferential openings (3) have been made at one end of this interior tube (1) through which pressurized air is expelled along its entire length, expelling the impurities that stick to the holes (4) made all along the surface of the filter pipe (2).
The pressurized air inlet (5) has been provided at one end of the interior tube (1), in such a way that it is connected to a surrounding chamber (6) with the same configuration as the interior tube (1), and which in turn is connected to the openings (3) that the interior tube (1) has at its other end for cleaning the filter pipe (2).

Although the injection of air is specified, any type of fluid can be injected into the interior tube (1) that will perform the same function and will succeed in keeping all the holes (4) of the filter pipe clean, expelling all the impurities that, during the normal process phase, stick to these holes made along the surface of the filter pipe (2).

## Claims

1. Device for cleaning the filter pipes used to extract fruit juice, **characterized by** the fact that it consists of a cylindrically shaped tube (1) that runs telescopically through the inside of the filter pipe (2), and some circumferential openings (3) have been made at one end of this interior tube (1) through which previously injected pressurized air is expelled along its entire length.

2. Device for cleaning the filter pipes used to extract fruit juice, according to claim 1, **characterized by** the fact that the interior tube (1) includes an air inlet (5) that has been provided at one end, and this air inlet (5) is connected to a surrounding chamber (6) with the same configuration as the interior tube (1) and in turn is connected to the openings (3) that this tube has at its other end for cleaning the filter pipe (2).

## Patentansprüche

1. Vorrichtung zum Reinigen von zum Extrahieren von Fruchtsaft verwendeten Filterrohren, **dadurch gekennzeichnet, dass** sie aus einem zylindrisch geformten Rohr (1) besteht, das teleskopierbar durch das Innere des Filterrohres (2) verläuft, und dass mehrere Umfangsöffnungen (3) an einem Ende des inneren Rohrs (1) vorgesehen sind, durch welche zuvor injizierte Druckluft über dessen gesamte Länge ausgelassen wird.

2. Vorrichtung zum Reinigen von zum Extrahieren von Fruchtsaft verwendeten Filterrohren nach Anspruch 1, **dadurch gekennzeichnet, dass** das innere Rohr (1) einen an einem Ende vorgesehenen Lufteinlass (5) aufweist, und dass dieser Lufteinlass (5) mit einer umgebenden Kammer (6) verbunden ist, welche die gleiche Ausbildung aufweist wie das innere Rohr (1) und ihrerseits mit den Öffnungen (3) verbunden ist, welche das Rohr an seinem anderen Ende zum Reinigen des Filterrohres (2) aufweist.

## Revendications

1. Dispositif pour nettoyer les tuyaux de filtre utilisés pour extraire du jus de fruit, **caractérisé en ce qu'**il se compose d'un tube de forme cylindrique (1) qui s'étend de manière télescopique à travers l'intérieur du tuyau de filtre (2) et quelques ouvertures circonférentielles (3) ont été pratiquées à une extrémité de ce tube intérieur (1) à travers lequel l'air sous pression préalablement injecté est expulsé le long de toute sa longueur.

2. Dispositif pour nettoyer les tuyaux de filtre utilisés pour extraire du jus de fruit, selon la revendication 1, **caractérisé en ce que** le tube intérieur (1) comprend une entrée d'air (5) qui a été prévue à une extrémité, et cette entrée d'air (5) est raccordée à une chambre périphérique (6) avec la même configuration que le tube intérieur (1) et à son tour est raccordée aux ouvertures (3) que ce tube possède à son autre extrémité pour nettoyer le tuyau de filtre (2).
